# DEMANDE DE BREVET EUROPEEN

(11) **EP 1 633 143 A1**
(43) Date de publication de la demande: **08.03.2006**
(21) Numéro de dépôt: 04292141.1
(22) Date de dépôt: 06.09.2004
(51) Int. Cl.: H04N 7/16

(54) **Procédé de gestion des conditions d'accès à un flux vidéo par un routeur / DSLAM, et routeur pour la mise en oeuvre de ce procédé**

(71) Demandeur: Nagra France Sarl, 75015 Paris (FR)
(72) Inventeur: Fichet, Laurent, 78320 Le Mesnil Saint Denis (FR); Piquet, Mathieu, 75002 Paris (FR); Lelegard, Thierry, 75015 Paris (FR); Oddou, Christophe, 94340 Joinville le pont (FR)
(74) Mandataire: Wenger, Joel-Théophile

(57) **Abrégé**

La présente invention concerne un procédé de gestion de la diffusion de contenus, notamment de contenus télédiffusés et en particulier de contenus de télévision par abonnement ou à péage, ces contenus étant diffusés par un fournisseur de contenus (13) à au moins une unité multimédia (STB) connectée à un dispositif de routage (12). Ce procédé comporte les étapes d'envoi d'une requête pour l'obtention d'un contenu spécifique par l'unité multimédia souhaitant obtenir ledit contenu, cette requête étant envoyée audit dispositif de routage (12); de détermination par le dispositif de routage, des conditions d'accès liées au contenu spécifique; et de détermination d'une action à entreprendre par ledit dispositif de routage en fonction desdites conditions d'accès, cette action aboutissant à l'envoi ou non dudit contenu spécifique.

L'invention concerne également un dispositif de routage de contenus entre un fournisseur de contenus (12) et au moins une unité multimédia (STB) connectée audit dispositif de routage. Ce dispositif comporte des moyens de mémorisation (15) des conditions d'accès auxdits contenus, des moyens de commutation agencés pour autoriser ou empêcher la diffusion d'un contenu spécifique du fournisseur de contenu vers ladite unité multimédia et des moyens de transfert de requêtes de l'unité multimédia au centre de gestion.

## Description

### DOMAINE DE L'INVENTION

La présente invention concerne un procédé de gestion de la diffusion de contenus, notamment de contenus télédiffusés et en particulier de contenus de télévision par abonnement ou à péage, ces contenus étant diffusés par un fournisseur de contenus à au moins une unité multimédia connectée à un dispositif de routage.

Elle concerne également un dispositif de routage de contenus permettant la mise en oeuvre du procédé.

### ART ANTERIEUR

Comme cela est bien connu, il existe actuellement des systèmes permettant l'accès à des contenus télédiffusés tels que des événements de télévision à péage. De façon très succincte, ces systèmes fonctionnent au moyen d'une unité multimédia comportant un décodeur disposant d'un module de sécurité. Le décodeur reçoit le contenu sous la forme d'un flux de données chiffrées. Le module de sécurité effectue un certain nombre d'opérations cryptographiques afin de déterminer si l'utilisateur du décodeur dispose des droits requis pour la visualisation du contenu et, le cas échéant, pour déchiffrer les données chiffrées.

D'autres systèmes permettant également l'accès à des contenus de télévision par abonnement ou à péage se développent actuellement. Ces systèmes utilisent le réseau Internet et des lignes de type xDSL (Digital Subscriber Line) et en particulier ADSL (Asymmetric Digital Subscriber Line) pour fournir aux abonnés, les contenus télédiffusés.

Dans les systèmes de ce type, un contenu, qui peut être un canal de télévision, un événement tel qu'un film ou un match de sport en particulier, un fichier de musique ou d'autres contenus similaires, est émis sous forme de flux par un centre de diffusion. Les contenus sont transmis au moyen d'une liaison par satellite, terrestre ou par câble ou par une combinaison de ces différents moyens à un centre de retransmission qui est en charge de diffuser les données formant ce contenu à destination des unités multimédia concernées. Pour permettre cette diffusion, le centre de retransmission comprend un dispositif de routage qui est en charge du routage des informations à destination de l'unité multimédia à qui les informations sont destinées. Un tel dispositif de routage est connu sous l'acronyme DSLAM (Digital Subscriber Line Access Multiplexer).

Dans de tels systèmes actuels, les utilisateurs qui souhaitent avoir accès aux contenus proposés par un fournisseur de contenus doivent généralement s'abonner auprès de ce fournisseur. Dans ce cas, tous les contenus gérés par ce fournisseur sont accessibles à l'abonné. Il n'existe en effet pas de moyen efficace pour gérer des droits d'accès à des contenus spécifiques. La gestion des droits d'accès pourrait se faire au moyen d'un module de sécurité associé à un décodeur tel qu'indiqué précédemment. Toutefois, il existe une demande de la part des opérateurs de télédiffusion et de télécommunication de s'affranchir de l'utilisation d'une carte à puce ou autres modules de sécurité, pour effectuer les opérations de contrôle.

Une solution envisageable consiste à intégrer les fonctionnalités de la carte à puce dans le décodeur. Ceci peut se faire sous forme logicielle. Cette solution n'offre toutefois pas un niveau de sécurité optimal du fait que l'on peut considérer que le décodeur peut être soumis à des manipulations frauduleuses de la part de personnes mal intentionnées. Il n'existe donc actuellement pas de solution permettant d'assurer la sécurité des données à accès conditionnel tout en se passant d'un module de sécurité fiable, dans le cadre d'un service de télévision par le biais du réseau Internet.

Il n'existe pas non plus de moyen simple et efficace pour offrir un abonnement "personnalisé" dans lequel l'abonné peut choisir certains canaux ou certains bouquets parmi un ensemble proposé par le fournisseur de contenus.

### BUTS DE L'INVENTION

La présente invention se propose de pallier les inconvénients des procédés de l'art antérieur en réalisant un procédé de gestion de la diffusion de contenus diffusés par un fournisseur de contenus à au moins une unité multimédia connectée à un dispositif de routage placé entre ledit fournisseur de contenus et ladite unité multimédia, caractérisé en ce qu'il comporte les étapes suivantes :
- envoi d'une requête pour l'obtention d'un contenu spécifique par l'unité multimédia souhaitant obtenir ledit contenu, cette requête étant envoyée audit dispositif de routage;
- détermination par le dispositif de routage, des conditions d'accès liées au contenu spécifique;
- détermination d'une action à entreprendre par ledit dispositif de routage en fonction desdites conditions d'accès, cette action aboutissant à l'envoi ou non dudit contenu spécifique.

L'invention se propose également de pallier les inconvénients des dispositifs de l'art antérieur en réalisant un dispositif de routage de contenus entre un fournisseur de contenus et au moins une unité multimédia connectée audit dispositif de routage, caractérisé en ce qu'il comporte :
- des moyens de mémorisation des conditions d'accès auxdits contenus,
- des moyens de commutation agencés pour autoriser ou empêcher la diffusion d'un contenu spécifique du fournisseur vers ladite unité multimédia, et
- des moyens de transfert de requêtes de l'unité multimédia au centre de gestion.

De façon générale, le dispositif de routage permettant la mise en oeuvre du procédé de l'invention contient des informations relatives aux droits requis pour l'accès à chaque contenu géré par le diffuseur. Lorsqu'une unité multimédia envoie une requête en vue d'obtenir un contenu spécifique, le dispositif de routage détermine une catégorie à laquelle appartient ce contenu. Selon la catégorie déterminée, le dispositif de routage peut entreprendre différentes actions. L'une des actions possibles consiste à envoyer les informations à l'unité multimédia sans vérification des droits associés à cette unité. Une autre action possible consiste à envoyer le contenu après vérification locale des droits associés à l'utilisateur ou à l'unité multimédia. Dans ce cas, la décision d'envoyer ou non le contenu se prend au niveau du dispositif de routage. Une autre action possible consiste à transférer la requête de l'unité multimédia au fournisseur de données. Le centre de gestion associé à ce fournisseur vérifie les droits associés à l'utilisateur ou à l'unité multimédia et prend la décision de transmettre ou de ne pas transmettre le contenu à cette unité multimédia. Dans ce cas, le dispositif de routage ne prend pas de décision, mais transfert simplement le contenu qu'il reçoit à l'unité multimédia qui en a fait la requête. Il est à noter que ce transfert peut se faire après un traitement de la requête par le dispositif de routage. Le traitement peut par exemple consister à changer le format de la requête, à chiffrer ou déchiffrer le contenu de cette requête et/ou à ajouter un identifiant du dispositif de routage.

Ce procédé est avantageux par le fait qu'il permet de gérer de façon souple et efficace différents types d'abonnement ainsi que des demandes d'achat impulsif. De plus, selon le type de contenu qui est requis par les unités multimédia, il n'est pas nécessaire de transmettre une requête au centre de gestion chaque fois qu'une unité multimédia émet une requête. Le dispositif de routage peut prendre seul la décision d'envoi ou non d'un contenu, ce qui est avantageux du fait de la liaison point à point entre le dispositif de routage et les unités multimédia.

### BREVE DESCRIPTION DES FIGURES

La présente invention et ses avantages seront mieux compris en référence aux dessins annexés dans lesquels :
- la figure 1 illustre de façon schématique les éléments permettant la mise en oeuvre du procédé de l'invention; et
- la figure 2 représente de façon schématique, les étapes du procédé de l'invention.

### MEILLEURE MANIÈRE DE RÉALISER L'INVENTION

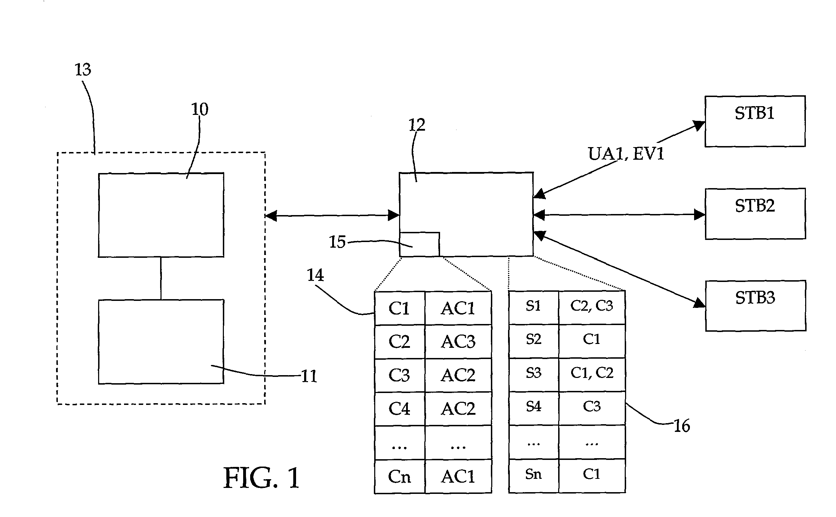

En référence à la figure 1, le procédé selon l'invention est appliqué dans un système de transmission de contenus télédiffusés et plus particulièrement un système de télévision numérique par abonnement ou à péage.

Ce système comprend essentiellement un centre de diffusion 10, un centre de gestion 11, un dispositif de routage 12 et une pluralité d'unités multimédia STB1, STB2, STB3.

Le centre de diffusion 10 et le centre de gestion 11 sont généralement associés et sont liés à un fournisseur de contenu 13. Ce centre de diffusion est en charge de la diffusion du contenu, sous la forme d'un flux de données. Cette diffusion se fait, comme indiqué précédemment, via une liaison qui peut être terrestre, par câble ou par satellite ou une combinaison de ces différents types, ou par le réseau Internet (réseau IP) ou tout autre moyen.

Le centre de gestion 11 est notamment en charge de la vérification des droits associés aux unités multimédia ou aux abonnés liés aux contenus diffusés par le centre de diffusion, comme cela est décrit en détail ci-dessous.

Le dispositif de routage 12 reçoit les contenus provenant du centre de diffusion 10. Il est en charge de router ces contenus vers l'unité multimédia ou les unités multimédia STB auxquelles ils sont destinés. Un tel dispositif est typiquement un équipement connu sous l'acronyme DSLAM.

L'unité multimédia STB peut être formée d'un décodeur et d'un équipement de visualisation (non représenté) tel qu'un téléviseur ou un ordinateur notamment. Cette unité multimédia ne comporte en principe pas de carte à puce ou celle-ci n'est pas utilisée dans l'application considérée. Les unités multimédia sont connectées au dispositif de routage par une liaison point à point.

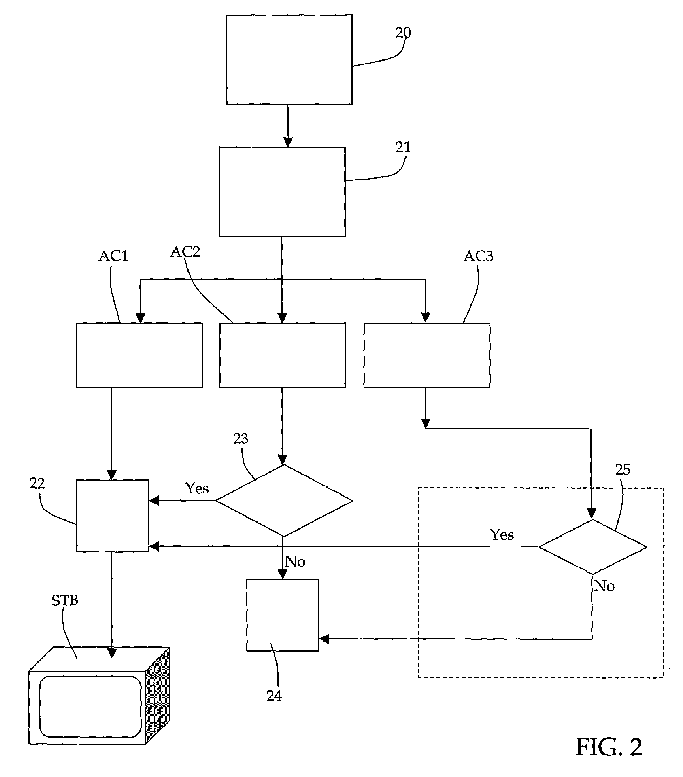

Le procédé de l'invention est illustré plus particulièrement par la figure 2. Il fonctionne de la façon suivante. Prenons l'exemple dans lequel un utilisateur d'une unité multimédia, par exemple STB1 souhaite obtenir un contenu spécifique parmi les contenus diffusés par le centre de diffusion. Cet utilisateur sélectionne ce contenu, par exemple un canal ou un événement au moyen d'une télécommande ou d'un clavier alphanumérique. Lors d'une étape 20, cette unité multimédia STB1 envoie une requête au dispositif de routage 12 via la connexion point à point entre ces deux éléments. Cette requête contient au moins un identifiant EV1 du contenu spécifique souhaité. Elle peut en outre inclure un numéro d'identification UA1 de l'unité multimédia concernée. L'identification de l'unité multimédia peut également se faire automatiquement au niveau du dispositif de routage par détection de la ligne utilisée entre l'unité multimédia et ce dispositif de routage. Ce contenu spécifique peut être un événement ponctuel tel qu'un film, un match de sport, un fichier musical acquis par exemple sous forme d'achat à l'unité ou d'achat impulsif (PPV pay per view) ou l'accès à un canal auquel l'utilisateur est abonné.

Lorsque le dispositif de routage a reçu la requête, il détermine, lors d'une étape 21, une catégorie associée au contenu spécifique souhaité. Parmi les différentes catégories possibles, il peut y avoir en particulier :
a) transmission du contenu, sans vérification des droits; cette catégorie est référencée par AC1 sur les figures.
b) transmission du contenu, avec vérification des droits; cette catégorie est référencée par AC2 sur les figures.
c) relais de la requête au fournisseur de contenu pour vérification des droits; cette catégorie est référencée par AC3 sur les figures.

Les droits pour chaque contenu, c'est-à-dire chaque événement ou chaque canal sont mémorisés dans une table 14 incluse dans une mémoire 15 du dispositif de routage 12. Les canaux ou événements sont référencés par C1, C2, ..., Cn sur la figure.

Supposons que l'unité multimédia STB1 requiert l'accès à un contenu spécifique appartenant à la première catégorie AC1 mentionnée ci-dessus. Lorsque la requête a été transmise au dispositif de routage, lors de l'étape 20 de la figure 2, celui-ci constate, après une recherche dans la table des événements 14, que le contenu appartient à cette première catégorie AC1 et qu'il peut par conséquent être transmis à toute unité multimédia qui en fait la demande. Le contenu spécifique provenant du fournisseur 13 et reçu par le dispositif de routage 12 est donc transmis, lors d'une étape 22, par la liaison point à point à l'unité multimédia, sans aucune vérification de droits.

Si l'unité multimédia requiert un contenu spécifique de la deuxième catégorie AC2 mentionnée ci-dessus, le dispositif de routage 12 va recevoir la requête comme précédemment et va déterminer l'appartenance à cette catégorie d'après la table des événements 14. Il doit ensuite vérifier l'existence de droits avant la transmission de l'événement, lors d'une étape 23.

Pour réaliser cette vérification, le dispositif de routage contient en outre une table 16 contenant la liste des unités multimédia STB connectées à ce dispositif de routage. En regard de chaque unité multimédia de cette liste se trouvent tout ou partie des droits associés à l'unité multimédia. Selon un mode de réalisation particulier, il est possible de n'intégrer dans cette table que les droits appartenant à la deuxième catégorie AC2. En effet, les contenus de la catégorie AC1 sont transférés à chaque unité multimédia qui en fait la demande, sans vérification des droits. Il est donc inutile de mémoriser les droits pour cette catégorie. De manière similaire, les droits d'accès aux contenus de la troisième catégorie mentionnée AC3 ne sont pas vérifiés dans le dispositif de routage. Il n'est donc pas non plus nécessaire de les mémoriser.

Les droits concernés peuvent être des droits pour un événement ponctuel, par exemple un film, un match de sport, un fichier musical acquis par exemple sous forme d'achat à l'unité ou d'achat impulsif (PPV, pay per view) ou l'accès à un ou des canaux ou à un ou des bouquets auxquels l'utilisateur est abonné.

Comme indiqué plus haut, l'unité multimédia concernée est identifiée soit automatiquement par le dispositif de routage, soit par le numéro d'identification qui peut être intégré dans la requête. Le dispositif de routage détermine donc d'après la table des droits 16 si l'unité multimédia qui a envoyé la requête dispose des droits requis pour visualiser l'événement demandé. Si tel est le cas, le contenu correspondant est transmis à l'unité multimédia lors de l'étape 22. Dans le cas contraire, il n'est pas transmis. Ceci est représenté par la référence 24 sur la figure 2.

Lorsque l'unité multimédia envoie une requête pour un contenu spécifique appartenant à la troisième catégorie AC3 citée, ce qui est déterminé par le dispositif de routage 12 en effectuant une recherche dans la table des événements 14, le dispositif de routage 12 n'est pas autorisé à prendre seul une décision d'envoi dudit contenu. Il transmet alors cette requête au centre de gestion 11 du fournisseur de contenu 13. A ce moment, le centre de gestion vérifie les droits d'accès associés à l'unité multimédia et les conditions d'accès liées au contenu requis lors d'une étape 25. Il prend ensuite la décision de transmettre ou non ce contenu à l'unité multimédia. Dans le cas où ce contenu est transmis, il transite par le dispositif de routage qui se charge de le relayer à l'unité multimédia concernée.

Dans ce dernier mode de réalisation décrit, le dispositif de routage transmet bien entendu le numéro d'identification de l'unité multimédia qui a envoyé la requête au centre de gestion, ceci afin de permettre la vérification des droits liés à cette unité multimédia. Selon une variante, il est également possible que le dispositif de routage ajoute un identifiant qui est propre au canal de diffusion entre le dispositif de routage et l'unité multimédia. Ceci permet d'assurer une sécurité supplémentaire du fait que si une personne mal intentionnée falsifie le numéro d'identification de son unité multimédia, elle ne pourra par contre pas falsifier le numéro identifiant le canal de diffusion, ce numéro étant exclusivement généré par le dispositif de routage.

## Revendications

1. Procédé de gestion de la diffusion de contenus diffusés par un fournisseur de contenus à au moins une unité multimédia connectée à un dispositif de routage placé entre ledit fournisseur de contenus et ladite unité multimédia, **caractérisé en ce qu'**il comporte les étapes suivantes :
• envoi (12) d'une requête pour l'obtention d'un contenu spécifique par l'unité multimédia (STB) souhaitant obtenir ledit contenu, cette requête étant envoyée audit dispositif de routage (12);
• détermination par le dispositif de routage, des conditions d'accès (AC1, AC2, AC3) liées au contenu spécifique requis;
• détermination d'une action à entreprendre par ledit dispositif de routage (12) en fonction desdites conditions d'accès (AC1, AC2, AC3), cette action aboutissant à l'envoi ou non dudit contenu spécifique.

2. Procédé de gestion de la diffusion de contenus selon la revendication 1, **caractérisé en ce qu'**il comporte en outre une étape (23) de détermination par le dispositif de routage (12) des droits associés à l'unité multimédia ayant envoyé la requête d'obtention du contenu spécifique et **en ce que** la détermination d'une action à entreprendre est fonction en plus des droits associés à ladite unité multimédia.

3. Procédé de gestion de la diffusion de contenus selon la revendication 1 ou 2, **caractérisé en ce que** les actions à entreprendre consistent au moins :
• soit à envoyer les données à l'unité multimédia (STB) ayant requis cet envoi, sans vérification des droits liés à cette unité multimédia;
• soit à envoyer les données à l'unité multimédia (STB) ayant requis cet envoi, uniquement après vérification des droits de cette unité multimédia par le dispositif de routage (12);
• soit à transmettre la requête de l'unité multimédia (STB) à un centre de gestion (11) lié audit fournisseur de contenu (13); à recevoir du centre de gestion (11) une indication de diffusion ou de blocage de la diffusion du contenu spécifique à ladite unité multimédia (STB) ayant requis cet envoi; et à autoriser ou bloquer la diffusion dudit contenu spécifique en fonction de l'indication reçue du centre de gestion (11).

4. Procédé de gestion de la diffusion de contenus selon la revendication 3, **caractérisé en ce que** ladite requête contient un numéro d'identification de l'unité multimédia, ce numéro d'identification étant généré par l'unité multimédia et/ou par le dispositif de routage.

5. Dispositif de routage de contenus entre un fournisseur de contenus et au moins une unité multimédia connectée audit dispositif de routage, **caractérisé en ce qu'**il comporte :
• des moyens de mémorisation (15) des conditions d'accès auxdits contenus,
• des moyens de commutation agencés pour autoriser ou empêcher la diffusion d'un contenu spécifique du fournisseur de contenu (13) vers ladite unité multimédia (STB), et
• des moyens de transfert de requêtes de l'unité multimédia (STB) au centre de gestion (11).

6. Dispositif de routage selon la revendication 5, **caractérisé en ce que** les conditions d'accès sont classées en catégories (AC1, AC2, AC3) et **en ce que** le dispositif comporte des moyens pour déterminer une catégorie à laquelle appartiennent les conditions d'accès et des moyens pour entreprendre une action en fonction de ladite catégorie.
